# EUROPÄISCHE PATENTANMELDUNG

(11) **EP 1 517 263 A2**
(43) Veröffentlichungstag der Anmeldung: **23.03.2005**
(21) Anmeldenummer: 04024860.1
(22) Anmeldetag: 18.09.2002
(51) Int. Cl.: G06K 11/18, G06F 3/033

(54) **Kombinierter Positions-/Kraftmomentensensor**

(30) Priorität: 21.09.2001 DE 10146473
(62) Teilanmeldung aus: 02774626.2
(71) Anmelder: 3Dconnexion GmbH, 82229 Seefeld (DE)
(72) Erfinder: Gombert, Bernd, 82229 Seefeld (DE)
(74) Vertreter: Rupp, Christian, Dipl.Phys.

(57) **Zusammenfassung**

Ein Eingabegerät (4) zur Ansteuerung von Computern, elektronischen oder elektrischen Geräten, weist einen zweidimensionalen Positionssensor (1), und einen Kraft-/Momentensensor (2) auf, der auf ein Bedienteil (5) des Kraft-/Momentensensors (2) einwirkende Kräfte und Drehmomente erfasst. Durch manuelle Manipulation des Eingabegeräts (4) können Ansteuersignale durch den zweidimensionalen Positionssensor (1) und/oder den Kraft-/Momentensensor (2) ausgelöst werden.

## Beschreibung

Die vorliegende Erfindung bezieht sich auf ein Eingabegerät, in dem ein Positionssensor mit einem Kraft-/Momentensensor kombiniert ist.

Der generelle Hintergrund der vorliegenden Erfindung ist das Ansteuern von realen oder virtuellen Objekten, wie bspw. von Computern, elektronischen oder elektrischen Geräten, wobei die Ansteuersignale durch Positionssensoren oder Kraft-/Momentsensoren ausgelöst werden. Ein Positionssensor ist ein Gerät, das die Lage und/oder die Relativbewegung des Geräts bezüglich eines Bezugspunktes erfasst. Ein Kraft-/Momentensensor ist ein Gerät, das die auf ein Bedienteil des Kraft-/Momentensensors einwirkende Kräfte und Drehmomente erfasst und auswertet.

Da gemäß der Erfindung auf die bei Positionssensoren und Kraft-/Momentensensoren grundsätzlich bekannte Technologie zurückgegriffen wird, soll im Folgenden kurz der Stand der Technik bzgl. Positions- und Kraft-/Momentensensoren erläutert werden.

Eingabegeräte mit Positionssensoren, die Ansteuersignale für virtuelle oder reale Objekte abhängig von der Position des Eingabegeräts und genauer gesagt abhängig von der Relativbewegung des Eingabegeräts gegenüber einer Unterlage oder einem Träger erzeugen, sind aus dem Stand der Technik bekannt. Sie erlauben eine intuitive und interaktive Kontrolle bspw. eines Cursors auf einer Bildschirmoberfläche. Beispiele für derartige Positionseingabegeräte sind die Computermaus, das Touchpad und der Trackball. Die Computermaus ist das am weitesten verbreitete Eingabegerät. Zu den grundlegenden Merkmalen von dieser gehören das Gehäuse mit einer planen Grundfläche und einem Aufbau, der die Bedienung mit einer Hand gestattet, ein oder mehrere Knöpfe auf der Oberseite, eine Einrichtung zum Erfassen der Bewegung an der Unterseite sowie ein Kabel bzw. eine Luftschnittstelle zur Datenübertragung zu einem Computer.

Bei solchen Positionseingabegeräten kann das Erfassen der Bewegung bezüglich der Unterlage bzw. bezüglich eines Trägers bspw.
- mechanisch (hier wird bspw. die Bewegung einer Kugel an der Unterseite in Richtungssignale übersetzt),
- optisch (hier wird die Bewegungserkennung mit Hilfe eines LED - Paares und einer speziellen Mausunterlage mit reflektierendem Gittermuster realisiert) und
- optomechanisch (es werden optische, zwei LED - Paare mit entsprechenden Sensoren, und mechanische Mittel, drehbare Lochscheibe, kombiniert.)
erfolgen.

Das sogenannte Touchpad ist ein flaches rechteckiges Tablett, welches berührungsempfindliche Sensoren verwendet, um die Lage eines Gerätes auf der Tablettoberfläche zu verfolgen. Der sogenannte Trackball besteht aus einer Kugel, die auf zwei Rollen gelagert ist. Die Rollen sind im rechten Winkel zueinander angeordnet und Wandeln eine Bewegung der Kugel in vertikale und horizontale Bewegungen auf dem Bildschirm um. In der Regel verfügt er über eine oder mehrere Tasten zum Auslösen anderer Aktionen.

Allgemein sind die genannten Eingabegeräte gut zur Positionssteuerung geeignet. Da indessen allgemein eine linear ansteigende Rückstellkraft fehlt, stellt der Weg kein Maß für eine eingeleitete Kraft dar. Somit können auf das Gerät eingeleitete Kräfte nicht erfasst werden. Noch weniger können eingeleitete Drehmomente erfasst werden, da eine Drehung des Eingabegeräts üblicherweise zu keinerlei Ansteuersignal führt. Darüber hinaus fehlt natürlich auch ein Rückstell-Drehmoment, das das Eingabegerät wieder in eine Nullage zurückkehren lässt.

Andererseits sind Kraft-/Momentensensoren aus dem Stand der Technik bekannt, die Ausgangssignale bzgl. eines auf sie einwirkenden Kraft-/Momentenvektors und somit Ausgangssignale bzgl. verschiedener Freiheitsgrade bereitstellen. Sie erlauben eine intuitive Kontrolle von realen und virtuellen Objekten in bis zu 6 Freiheitsgraden (bspw. drei translatorische und drei rotatorische Freiheitsgrade). Weitere Freiheitsgrade können durch Schalter, Drehrädchen etc. bereitgestellt werden, die dem Kraft-/Momentensensor fest zugeordnet sind.

DE 199 52 560 A1 offenbart ein Verfahren zum Ein- und/oder Verstellen eines Sitzes eines Kraftfahrzeugs unter Verwendung eines multifunktionalen, von Hand betätigten Eingabegerät mit Kraft-/Momentensensor. In Fig. 6 der DE 199 52 560 A1 ist ein solcher Kraft-/Momentensensor dargestellt. Insoweit wird daher bzgl. der technischen Einzelheiten eines solchen Sensors auf diese Figur und die zugehörige Beschreibung für die DE 199 52 560 A1 verwiesen. Bei der DE 199 52 560 A1 weist das Eingabegerät eine Bedienoberfläche auf, auf der eine Anzahl von Bereichen zum Eingeben mindestens eines Druckimpulses vorgesehen sind. Das Eingabegerät weist eine Einrichtung zur Auswertung und Erkennung eines mittels des Kraft-/Momentensensors erfassten und in ein Kraft und Momenten-Vektorpaar umgesetzten Druckimpulses auf. Nach derartiger Auswahl bspw. eines anzusteuernden Sitzes bzw. Sitzteiles eines Kraftfahrzeugs kann dann das ausgewählte Gerät mittels eines analogen Signals des Kraft-/Momentensensors linear angesteuert werden. Die Auswahl einer Funktion sowie die darauffolgende Ansteuerung sind also gemäß diesem Stand der Technik in zwei zeitlich voneinander getrennte Abläufe getrennt.

Aus der DE 199 37 307 A1 ist es bekannt, einen derartigen Kraft-/Momentensensor zum Steuern von Bedienelementen eines realen oder virtuellen Misch- bzw. Steuerpults zu verwenden, beispielsweise um neuartige Farb-, Licht- und/oder Tonkompositionen zu kreieren und zu gestalten. Hierbei kann in vorteilhafter Weise die intuitive räumliche Steuerung in drei translatorischen sowie drei rotatorischen Freiheitsgraden auf ein stufenloses räumliches Mischen oder Steuern einer großen Anzahl von optischen und/oder akustischen Parametern übertragen werden. Zur Steuerung wird auf die Bedienoberfläche des Eingabegeräts ein Druck ausgeübt und dadurch ein Impuls erzeugt, der mit Hilfe des Kraft-/Momentensensors erfasst und in ein aus einem Kraft- und einem Momentenvektor bestehendes Vektorpaar umgesetzt wird. Werden dabei bestimmte charakteristische Impulsvorgaben erfüllt, kann beispielsweise eine objektspezifische Steueroperation und/oder eine technische Funktion durch Schalten in einen Aktivierungszustand ausgelöst bzw. durch Schalten in einen Deaktivierungszustand wieder beendet werden.

Zur Erfassung von Kräften und Momenten weisen die bekannten Kraft-/Momentensensoren ein Bedienteil auf, das bezüglich eines Basisteils bspw. mittels Federn oder dgl. in drei Achsen beweglich gelagert ist. Der Bewegungsspielraum in jeder Achse ist dabei üblicherweise auf wenige Millimeter beschränkt. In der Praxis hat sich gezeigt, dass Kraft-/Momentensensoren daher schlecht für eine Positionssteuerung geeignet sind.

Ausgehend von dem oben genannten Stand der Technik bzgl. Positions- und Kraft-/Momentensensoren ist Aufgabe der vorliegenden Erfindung, ein Eingabegerät zur Ansteuerung von realen oder virtuellen Objekten vorzuschlagen, das die oben genannten Nachteile vermeidet.

Diese Aufgabe wird erfindungsgemäß durch die Merkmale der unabhängigen Ansprüche gelöst. Die abhängigen Ansprüche bilden den zentralen Gedanken der Erfindung in besonders vorteilhafter Weise weiter.

Diese Aufgabe wird gemäß der Erfindung dadurch gelöst, dass der Positions- und Kraft-/Momentensensoren in einem Gerät integriert wird. Dies ermöglicht es bspw., eine bestimmte Position mit dem Positionssensor anzufahren und dann dort Kraft- und/oder Momentenabhängige Ansteuersignale auszugeben.

Gemäß der Erfindung weist das Eingabegerät zur Ansteuerung von virtuellen und/oder realen Objekten einen zweidimensionalen Positionssensor und einem Kraft-/Momentensensor auf, der die auf ein Bedienteil des Kraft-/Momentensensors einwirkende Kräfte und Drehmomente erfasst. Durch manuelle Einwirkung auf das Eingabegerät werden Ansteuersignale durch den zweidimensionalen Positionssensor und/oder den Kraft-/Momentensensor ausgelöst.

Der in das Eingabegerät eingebaute zweidimensionale Positionssensor erfasst die Lage des Eingabegeräts bezüglich der Unterlage durch eine Einrichtung zum Erfassen der Bewegungsrichtung ( in der Regel eine Kugel).

Alternativ kann die Erfassung der Lage erfolgen. optisch Besonders vorteilhaft ist dabei eine bogenförmigen Ausgestaltung des Gehäuses des Eingabegerätes. Bei dieser Ausführungsform besitzt das Gerät zwei Auflageflächen, mit denen es im Betrieb auf einer Unterlage aufliegt. In einer dieser Auflageflächen ist der zweidimensionale Positionssensor integriert.

Das Bedienteil des Kraft-Momentensensors ist der Unterseite des bogenförmigen Gehäuses des Eingabegerätes angebracht. Der Kraft-/Momentensensor ist dadurch nur mit den Fingerspitzen der Hand des Benutzers manipulierbar, wodurch eine übermäßige Belastung des Kraft-/Momentensensors vermieden wird.

Während der Benutzung des Eingabegerätes kann die Handfläche des Benutzers bequem auf dem Gehäuse ruhen. Alternativ kann das Eingabegerät die Form einer herkömmlichen Computermaus haben bzw. rund oder oval sein. Der Kraft-/Momentensensor ist an der Oberseite integriert und der Positionssensor an der Unterseite. Er kann auf optischem, optomechanischem oder mechanischem Weg realisiert werden.

Hat das Eingabegerät die oben genannte Computermaus-Form so kann der Kraft-/Momentensensor alternativ seitlich integriert sein.

Hat das Eingabegerät obengenannte Computermaus-Form und der Positionssensor befindet sich an der Unterseite, so kann oben oder seitlich ein Kraft-/Momentensensor angedockt werden. Das Positionssensor und Kraft-/Momentensensor in diesem Zustand eine körperliche Einheit bilden, kann das zusammengebaute Gerät mit einer Hand bedient werden.

Alternativ kann indessen vorgesehen sein, dass der zweidimensionale Positionssensor in der Oberseite des Bedienteils des Kraftmomentsensors integriert ist.

In diesem Fall kann der zweidimensionale Positionssensor entweder durch ein Touchpad oder durch ein Kugelelement realisiert werden. Wird ein Touchpad verwendet so wird durch die Bewegen des Fingers auf dem Pad als zweidimensionale Positionsinformation erfasst und verwertet. Im Falle des Kugelelementes (Trackball) wird seine Drehung bezüglich des Bedienteils des Kraft-/Momentensensor als zweidimensionale Positionsinformation erfasst und verwertet.

Alternativ kann indessen vorgesehen sein dass das Bedienteils des Kraft-/Momentensensor sich auf dem zweidimensionale Positionssensor frei bewegen kann. In diesem Fall wird der zweidimensionale Positionssensor durch ein Touchpad realisiert. Die Bewegung des Bedienteils des Kraft-/Momentensensor auf dem Touchpad werden als zweidimensionale Positionsinformation erfasst und verwertet.

Weitere Merkmale, Vorteile und Eigenschaften der vorliegenden Erfindung werden nunmehr anhand von Ausführungsbeispielen und bezugnehmend auf die Figuren der begleitenden Zeichnungen erläutert.
- Fig. 1: zeigt dabei ein erfindungsgemäßes Eingabegerät, bei dem ein Positionssensor in der Auflagefläche integriert ist und der Kraft/Momentensensor an der Unterseite angebracht ist,
- Fig. 2: zeigt ein Eingabegerät, das die Form einer herkömmlichen Computermaus hat,
- Fig. 3: zeigt ein weiteres Eingabegerät, das die Form einer herkömmlichen Computermaus hat,
- Fig. 4: zeigt ein Eingabegerät, bei dem der Positionssensor in der Oberseite des Bedienteils des Kraft-/Momentensensor integriert ist, und
- Fig. 5: zeigt eine Anordnung, bei der der Positionssensor mittels einer lösbaren Verbindung mit dem Kraft-/Momentensensor verbindbar ist..

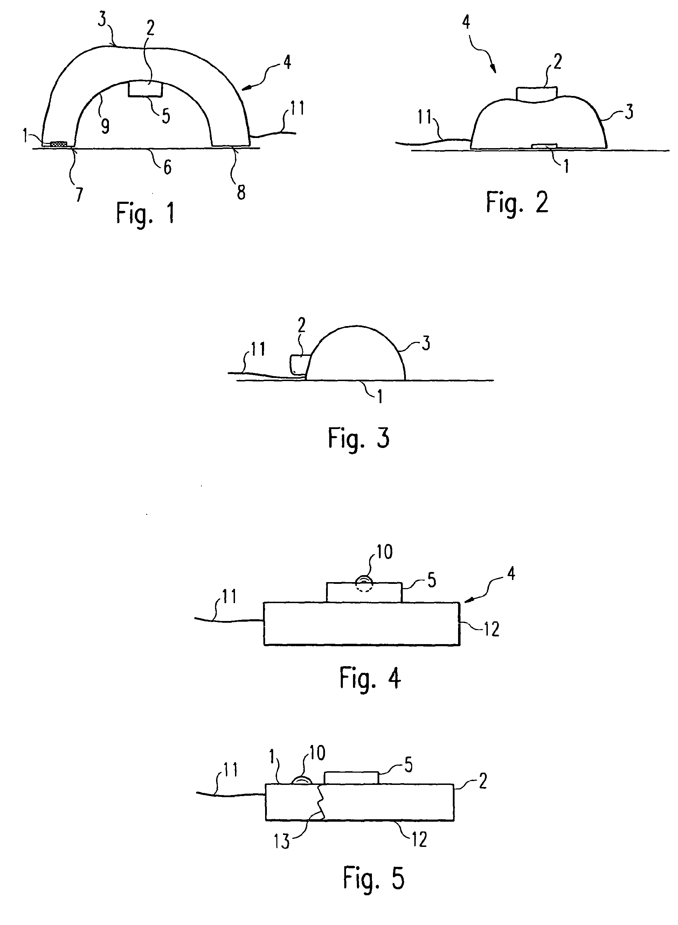

Bei der in Fig. 1 gezeigten Ausführungsform ist das Gehäuse des Eingabegeräts 4 im wesentlichen bogenförmig ausgestaltet. Infolge dessen besitzt das Eingabegerät 4 zwei Auflageflächen 7, 8, mit dem es auf einer Unterlage 6 aufliegt. An der Unterseite einer dieser Auflageflächen, im gezeigten Fall der Auflagefläche 7, ist ein zweidimensionaler Positionssensor 1 integriert. Er erfasst relative Bewegungen und somit die Lage des Eingabegerätes 4 bzgl. der Unterlage 6. Diese Erfassung kann optisch, optomechanisch oder mechanisch erfolgen.

Der Kraft-/Momentensensor 2 ist an der Unterseite 9 des bogenförmigen Eingabegerätes 4 angebracht. Er weist ein Bedienteil 5 auf, das bezüglich des Gehäuses des Eingabegeräts 4 in mehreren Achsen beweglich gelagert ist. Durch diese spezielle, geschützte Anbringung des Bedienteils 5 ist es nur mit den Fingerspitzen der Hand des Benutzers manipulierbar, wodurch in vorteilhafter Weise eine mechanische Überlastung vermieden werden kann. Die Praxis hat nämlich gezeigt, dass bei Kraft-/Momentensensoren die Gefahr besteht, dass sie durch Auflegen der Handfläche selbst bis zum Anschlag bewegt werden und somit nicht mehr operationsfähig sind.

Der Kraft-/Momentensensor 2 erfasst Kräfte- und Drehmomenteinwirkungen auf das Bedienteil 5 mittels der Relativbewegung des Bedienteils 4 in drei Achsen gegenüber dem Gehäuse des Eingabegeräts 4. Während der Benutzung des Eingabegerätes 4 kann die Handfläche des Benutzers bequem auf der Oberseite 3 des Gehäuses des Eingabegeräts 4 ruhen.

Die Ansteuersignale des Positionssensors 1 und des Kraft-/Momentensensors 2 können mittels eines Kabels 11 oder einer Luftschnittstelle (IR, elektromagnetisch wie z.B. gemäß dem Bluetooth-Standard etc.) an einen Computer, elektronische oder elektrische Geräte weitergegeben werden.

Bei der Ausführungsform gemäß Fig. 2 besitzt das Eingabegerät 4 die Form einer herkömmlichen Computermaus. Der Kraft-/Momentensensor 2 ist dabei an der Oberseite des Gehäuses einer herkömmlichen Computermaus angebracht. Der Kraft-/Momentensensor 2 ist so angebracht sein, dass er sich bequem mit den Fingern durch Drücken, Ziehen oder Drehen steuern lässt. Während der Benutzung des Eingabegerätes 4 kann die Handfläche des Benutzers bequem auf dem Gehäuse 3 ruhen.

Figur 3 zeigt eine Abänderung des Ausführungsbeispiels von Figur 2 dahingehend, dass der Kradt-Momentensensor 2 auf der Stirnseite des Gehäuses einer Computermaus 3 angeordnet ist, was wiederum den Vorteil hat, dass er bei üblicher Handhabung der Computermaus mit den Fingerspitzen manipuliert wird.

Bei dem Ausführungsbeispiel gemäß Fig. 4 ist der zweidimensionale Positionssensor 1 in das Bedienelement 5 des Kraft-/Momentensensor 2 integriert. Der zweidimensionale Positionssensor 1 kann entweder durch ein Touchpad oder wie dargestellt durch einen Trackball 10 realisiert werden. In dem Bedienteil 5 des Kraft-/Momentensensors werden somit die Positions-Ansteuersignale erzeugt und zu dem Basisteil 12 des Kraft-/Momentensensors weitergeleitet.

Bei dem Ausführungsbeispiel gemäß Fig. 5 schließlich ist der zweidimensionale Positionssensor 2 mittels einer lösbaren Verbindung, die schematisch mit 13 bezeichnet ist, mit dem Kraft-Momentensensor 2 und genauer gesagt mit dem Basisteil 12 des Kraft-Momentensensors 2 zu einer körperlichen Einheit verbindbar.

## Patentansprüche

1. Eingabegerät zur Ansteuerung von Computern, elektrischen oder elektronischen Geräten, aufweisend:
- einen 2D-Positionssensor (1), und
- einen 3D-Kraft-/Momentensensor (2), der auf ein Bedienteil (4) einwirkende Kräfte und Momente erfasst,
wobei durch manuelle Manipulation des Eingabegeräts (4) Ansteuersignale durch den 2D-Positionsensor (1) und/oder den Kraft-/Momentensensor (2) auslösbar sind, und
wobei der 2D-Positionssensor (1) und der 3D-Kraft-/Momentensensor (2) an der Oberseite (3) eines Gehäuses des Eingabegeräts angeordnet sind,
diese Oberseite (3) zum Ruhen der Hand des Benutzers auf der Oberseite (3) während der Betätigung des Eingabegeräts (4) ausgebildet ist,
und das Gehäuse zur Auflage auf eine Unterlage (6) ausgebildet ist.

2. Eingabegerät zur Ansteuerung von Computern, elektrischen oder elektronischen Geräten, aufweisend:
- einen 2D-Positionssensor (1), und
- einen 3D-Kraft-/Momentensensor (2), der auf ein Bedienteil (4) einwirkende Kräfte und Momente erfasst,
wobei durch manuelle Manipulation des Eingabegeräts (4) Ansteuersignale durch den 2D-Positionsensor (1) und/oder den Kraft-/Momentensensor (2) auslösbar sind.

3. Eingabegerät nach einem der vorhergehenden Ansprüche,
**dadurch gekennzeichnet,**
**dass** der 3D-Kraft-/Momentensensor (2) Kräfte und Momente zur Erfassung von drei translatorischen und drei rotatorischen Freiheitsgraden ausgebildet ist.

4. Eingabegerät nach Anspruch 1,
**dadurch gekennzeichnet,**
**dass** der 2D-Positionssensor (1) eine Relativbewegung gegenüber eines Trägers erfasst.

5. Eingabegerät nach einem der vorhergehenden Ansprüche,
**dadurch gekennzeichnet,**
**dass** weitere Freiheitsgrade mittels Schaltern bereitgestellt sind.
